(19) Europäisches Patentamt
European Patent Office
Office européen des brevets

(11) **EP 3 299 408 B1**

(12) **EUROPEAN PATENT SPECIFICATION**

(45) Date of publication and mention
of the grant of the patent:
**18.09.2019 Bulletin 2019/38**

(51) Int Cl.:
**B29C 70/38** (2006.01)   **B29C 70/34** (2006.01)
**B29B 15/14** (2006.01)   **B29K 105/10** (2006.01)
**C08J 5/24** (2006.01)   **C08J 5/04** (2006.01)
**B29C 70/46** (2006.01)   **B29C 69/00** (2006.01)

(21) Application number: **16799900.2**

(22) Date of filing: **18.05.2016**

(86) International application number:
**PCT/JP2016/064762**

(87) International publication number:
**WO 2016/190194 (01.12.2016 Gazette 2016/48)**

(54) **TAPE-SHAPED PREPREG AND FIBER-REINFORCED MOLDED OBJECT**

BANDFÖRMIGES PREPREG UND FASERVERSTÄRKTER FORMKÖRPER

PRÉIMPRÉGNÉ EN FORME DE RUBAN ET OBJET MOULÉ RENFORCÉ PAR DES FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2015   JP 2015105014**

(43) Date of publication of application:
**28.03.2018   Bulletin 2018/13**

(73) Proprietor: **Kabushiki Kaisha Kobe Seiko Sho
(Kobe Steel, Ltd.)
Kobe-shi, Hyogo 651-8585 (JP)**

(72) Inventors:
• **FUJIURA, Takayasu**
  **Hyogo 651-2271 (JP)**
• **TASHIRO, Naoyuki**
  **Hyogo 676-8670 (JP)**

(74) Representative: **TBK
Bavariaring 4-6
80336 München (DE)**

(56) References cited:
**WO-A1-2008/099670     WO-A1-2014/103711
JP-A- 2002 128 921     JP-A- 2013 202 813
JP-A- 2013 203 786     JP-A- 2013 221 040
JP-A- 2013 221 040**

## Description

### Technical Field

The present invention relates to a tape-shaped prepreg and a fiber-reinforced molded object.

### Background Art

A tape-shaped prepreg including a plurality of unidirectionally oriented fibers and a binder infiltrated into these fibers is used as an intermediate material for producing a fiber-reinforced molded object. With this tape-shaped prepreg, a fiber-reinforced molded object can be formed by the lamination pressing method, the filament winding method, or the like. The tape-shaped prepreg used for producing a fiber-reinforced molded object such as this is requested to have an excellent formability in producing the fiber-reinforced molded object in addition to the ability of forming the fiber-reinforced molded object being excellent in mechanical properties and uniformity of the product quality.

There is, for example, a method of improving the softness by reducing the average thickness as a method for improving the formability of the tape-shaped prepreg. Also, there are, for example, a method of increasing the content of the plurality of fibers and a method of enhancing the degree of dispersion and the degree of orientation of the plurality of fibers as a method for improving the mechanical properties and uniformity of the product quality of the fiber-reinforced molded object formed from the tape-shaped prepreg.

However, when the average thickness of the tape-shaped prepreg is reduced, the content of the plurality of fibers decreases in accordance therewith. Also, in the case of increasing the content percentage of the plurality of fibers in order to increase the content of the plurality of fibers, the degree of dispersion and the degree of orientation of the plurality of fibers are liable to decrease due to the aggregation of the fibers at the time of infiltrating the binder, generation of fluffing caused by scraping with the die at the time of molding, or the like. Thus, in the tape-shaped prepreg, it is difficult to achieve reduction of the average thickness and increase in the degree of dispersion, degree of orientation, and content percentage of the plurality of fibers at the same time, so that it is difficult to satisfy the above demands simply by the adjustment of these alone.

Accordingly, as another tape-shaped prepreg on which satisfaction of the above demands and the like are studied, there is proposed, for example, a tape-shaped prepreg in which a thermoplastic resin is infiltrated into a reinforcement fiber sheet wherein the cross-sectional shape of tape-shaped prepreg is substantially a parallelogram, and the upper and lower surfaces are substantially flat planes (See Patent Literature 1).

Also, there is proposed a tape-shaped prepreg obtained by infiltrating a thermoplastic resin into reinforcement fibers, characterized in that the elongational elastic modulus of the reinforcement fiber monofilament, the cross-sectional area of the reinforcement fiber monofilament, and the number of reinforcement fiber monofilaments in the tape-shaped prepreg as well as the average thickness and void ratio of the tape-shaped molding material are set to be within predetermined ranges (See Patent Literature 2).

Further, there is proposed a carbon fiber reinforced polycarbonate-based tape-shaped prepreg made of a polycarbonate resin having a melt viscosity at 250°C of 1 to 100 Pa·s and unidirectionally paralleled carbon fibers (See Patent Literature 3).

However, even with these conventional tape-shaped prepregs, it has been difficult to satisfy the demand for being excellent in formability and being capable of forming a fiber-reinforced molded object satisfying all the demands of mechanical properties and uniformity of the product quality.

### Citation List

### Patent Literature

Patent Literature 1: Japanese Unexamined Patent Publication No. 2000-355629
Patent Literature 2: Japanese Unexamined Patent Publication No. 06-143273
Patent Literature 3: Japanese Unexamined Patent Publication No. 2014-91825
Patent Literature 4: WO 2008/099670A1 discloses a prepeg which comprises many reinforcing fibers arranged in one direction.

### Summary of Invention

The present invention has been made in view of the aforementioned circumstances, and an object thereof is to provide a tape-shaped prepreg being capable of forming a fiber-reinforced molded object excellent in mechanical properties and uniformity of product quality and also being excellent in formability.

An aspect of the present invention is a tape-shaped prepreg which includes a plurality of unidirectionally oriented fibers and a binder infiltrated into these fibers. The tape-shaped prepreg is characterized by having an average thickness of 50 $\mu$m to 150 $\mu$m and a content percentage of these fibers of 30 vol% to 60 vol%. The tape-shaped prepreg is further characterized in that: when a cross-sectional image perpendicular to the orientation direction of these fibers is equally divided into n sections (n is an integer of 2 or larger) along each of the lengthwise and crosswise directions and a coefficient of variation Cv(n) is determined from the areal proportion a of fibers in each of the regions formed by the division, then the coefficient of variation Cv(n) has a fractal dimension D of 0.4 to 1.5; and a degree of orientation P, expressed by the following equation determined from an approximate ellipse of a power-spectrum image obtained by the Fourier transform of a cross-sectional image parallel to the orientation direction of these fibers, is 0.8 or greater and less than 1.0.

$$\text{Degree of orientation P} = 1 - ((\text{minor-axis length of approximate ellipse})/(\text{major-axis length thereof})) \qquad (\text{Equation 1})$$

The aforementioned and other objects, characteristic features, and advantages of the present invention will be apparent from the following detailed description and attached drawings.

**Brief Description of Drawings**

FIG. 1 is a schematic plan view illustrating a tape-shaped prepreg according to one embodiment of the present invention.

FIG. 2 is a schematic enlarged view of a cross-section along the line X1-X1 of FIG. 1.

FIG. 3A is a schematic view used for describing a method of calculating a degree of dispersion of a plurality of fibers.

FIG. 3B is a schematic view used for describing the method of calculating the degree of dispersion of a plurality of fibers.

FIG. 3C is a schematic view used for describing a method of calculating the degree of dispersion of a plurality of fibers.

FIG. 4A illustrates one example of a cross-sectional image used for calculating the degree of orientation P of a tape-shaped prepreg.

FIG. 4B illustrates an image obtained by binarizing the cross-sectional image of FIG. 4A.

FIG. 4C is a two-dimensional power spectrum image obtained by Fourier transform on the image of FIG. 4B.

FIG. 4D is an image showing an approximate ellipse drawn from the two-dimensional power spectrum image of FIG. 4C.

FIG. 5A shows measurement data of the arithmetic average roughness (Ra) of the tape-shaped prepreg of Example 1.

FIG. 5B shows measurement data of the arithmetic average roughness (Ra) of the tape-shaped prepreg of Comparative Example 1.

FIG. 6A is a cross-sectional image of the tape-shaped prepreg of Example 1.

FIG. 6B is a cross-sectional image of the tape-shaped prepreg of Comparative Example 1.

FIG. 7A is a planar photograph of the tape-shaped prepreg of Example 1.

FIG. 7B is a planar photograph of the tape-shaped prepreg of Comparative Example 1.

**Description of Embodiments**

Hereafter, embodiments of the present invention will be described with suitable reference to the drawings.

<First embodiment>

[Tape-shaped prepreg]

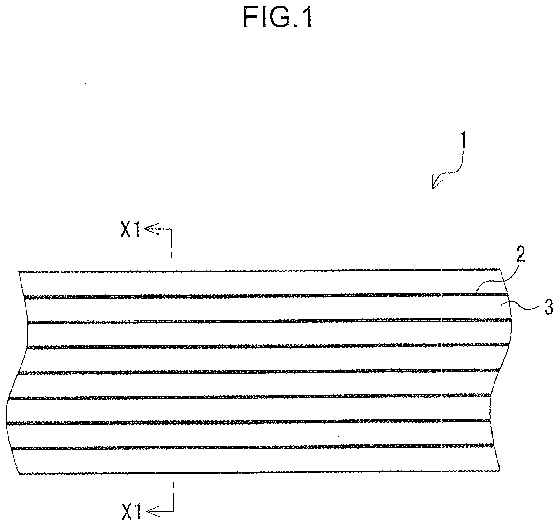

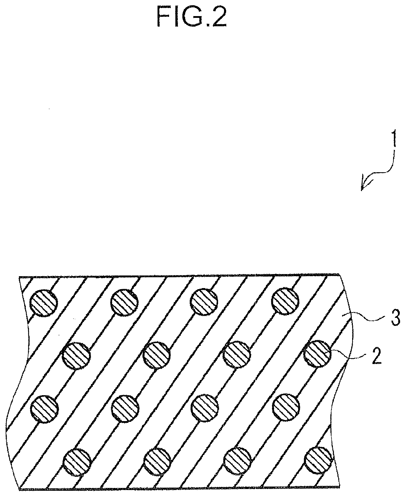

The tape-shaped prepreg 1 of FIGS. 1 and 2 includes a plurality of unidirectionally oriented fibers 2 and a binder 3 infiltrated into these fibers 2. The tape-shaped prepreg 1 may include other arbitrary components within the range that does not deteriorate the effects of the present invention.

The tape-shaped prepreg 1 has an average thickness of 50 $\mu$m to 150 $\mu$m, and a content percentage of these fibers is 30 vol% to 60 vol%. Further, when a cross-sectional image perpendicular to the orientation direction of these fibers is equally divided into n sections (n is an integer of 2 or larger) along each of the lengthwise and crosswise directions and a coefficient of variation Cv(n) is determined from the areal proportion a of fibers in each of the regions formed by the division, then the coefficient of variation Cv(n) has a fractal dimension D of 0.4 to 1.5, and the degree of orientation P, expressed by the following equation determined from an approximate ellipse of a power-spectrum image obtained by the Fourier transform of a cross-sectional image parallel to the orientation direction of these fibers, is 0.8 or greater and less than 1.0.

$$\text{Degree of orientation P} = 1 - ((\text{minor-axis length of approximate ellipse})/(\text{major-axis length thereof})) \qquad (\text{Equation 1})$$

Since the tape-shaped prepreg has an average thickness within the aforementioned range and hence is suitably thin, the tape-shaped prepreg is excellent in formability while retaining the content of the fibers. Also, since the tape-shaped prepreg has a content percentage of the fibers within the aforementioned range, the content of the fibers can be increased while retaining the degree of dispersion and the degree of orientation of the fibers described later. Further, with the tape-shaped prepreg, the fractal dimension D calculated on the basis of the cross-sectional image is within the aforementioned range and hence is comparatively high. Here, as the numerical value of the fractal dimension D is larger, the degree of dispersion of the fibers is more excellent, that is, the plurality of fibers are more uniformly dispersed in the binder. For this reason, the tape-shaped prepreg is excellent in mechanical properties and uniformity of product quality. Furthermore, with the tape-shaped prepreg, the degree of orientation of the fibers is within the aforementioned range and hence is comparatively high. Here, as the numerical value of the degree of orientation is larger, the orientation property of the fibers is more excellent, that is, the identicalness of the orientation direction of the plurality of fibers is high. For this reason, the tape-shaped prepreg is excellent in mechanical properties and uniformity of product quality from this respect as well. In other words, since the average thickness and the content percentage of the fibers as well as the degree of dispersion and the degree of orientation are within the aforementioned ranges, the tape-shaped prepreg is excellent in formability and in the mechanical properties and uniformity of product quality of the fiber-reinforced molded object, all with a good balance.

Here, the term "binder" is meant to include those having a matrix shape that disperses the fibers. The "average thickness" is a value as measured in accordance with JIS-K7130: 1999 "Plastics - Film and sheeting - Determination of thickness". The term "orientation direction of fibers" refers to the following. When a square region (for example, 500 $\mu$m $\times$ 500 $\mu$m) on one surface of the tape-shaped prepreg is observed with a microscope, the "orientation direction of fibers" means the direction indicated by an average orientation angle of the fibers contained in the region relative to the longitudinal direction of the tape-shaped prepreg. The "cross-sectional image perpendicular to the orientation direction of the fibers" refers to an image of the cross-section in which the orientation direction of the fibers is the normal line direction. The "cross-sectional image parallel to the orientation direction of the fibers" refers to an image of the cross-section that is captured from a direction perpendicular to the orientation direction of the fibers. In other words, the "cross-sectional image parallel to the orientation direction of the fibers" may be, for example, an image of a cross-section parallel to the principal surface of the tape-shaped prepreg. The term "cross-sectional image" is meant to include a slice image obtained by CT or the like.

A lower limit of the average thickness of the tape-shaped prepreg 1 is 50 $\mu$m, preferably 55 $\mu$m, and more preferably 62 $\mu$m. On the other hand, an upper limit of the average thickness of the tape-shaped prepreg 1 is 150 $\mu$m, preferably 130 $\mu$m, more preferably 90 $\mu$m, and still more preferably 70 $\mu$m. When the average thickness of the tape-shaped prepreg 1 is smaller than the above lower limit, there is a fear that the tape-shaped prepreg 1 may be liable to be fractured during the forming. Conversely, when the average thickness of the tape-shaped prepreg 1 exceeds the above upper limit, there is a fear that the formability may decrease due to insufficient softness.

Here, the thickness in the term "average thickness" refers to the length of the tape-shaped prepreg 1 in the thickness direction. The thickness may be, for example, the length of the tape-shaped prepreg 1 in the direction perpendicular to the orientation direction and the width direction of the fibers 2, or the like.

An average width of the tape-shaped prepreg 1 is not particularly limited and can be suitably changed in accordance with the purpose of use. A lower limit of the average width of the tape-shaped prepreg 1 may be, for example, 1 cm. On the other hand, an upper limit of the average width of the tape-shaped prepreg 1 may be, for example, 50 cm.

Here, the "average width" refers to an average value of the widths determined by measurement at arbitrary ten points. The width is the length of the tape-shaped prepreg 1 in the width direction. The width may be, for example, the length of the tape-shaped prepreg 1 in the direction perpendicular to the orientation direction and the thickness direction of the fibers 2, or the like. More specifically, the width may be, for example, the largest length of the tape-shaped prepreg 1 among the lengths in the direction perpendicular to the orientation direction of the fibers 2.

A lower limit of the arithmetic average roughness (Ra) of the tape-shaped prepreg 1 is preferably 2 $\mu$m, more preferably 3.5 $\mu$m, and still more preferably 4 $\mu$m. On the other hand, an upper limit of the arithmetic average roughness (Ra) is preferably 8 $\mu$m, more preferably 6 $\mu$m, and still more preferably 4.5 $\mu$m. When the arithmetic average roughness (Ra) is smaller than the above lower limit, air is unlikely to escape from between the layers during the lamination pressing or filament winding, thereby raising a fear of decrease in the formability. Also, generation of air bubbles in the fiber-reinforced molded object raises a fear of decrease in the mechanical properties and aggravation of the outer appearance. On the other hand, when the arithmetic average roughness (Ra) exceeds the above upper limit, gaps are liable to be generated between the layers during the lamination pressing or filament winding, thereby raising a fear of decrease in the formability. Also, generation of air bubbles in the fiber-reinforced molded object raises a fear of decrease in the mechanical properties and aggravation of the outer appearance. Furthermore, when the tape-shaped prepreg 1 is wound around a bobbin or the like at the time of production and storage, there is a fear that the wound object may become unnecessarily large. The term "arithmetic average roughness (Ra)" used herein refers to the arithmetic average roughness of the surface of the tape-shaped prepreg 1. In other words, the arithmetic average roughness (Ra) is the arithmetic average roughness of the surface of the tape-shaped prepreg 1 that is present in the direction perpendicular to the orientation direction of the plurality of fibers 2, and may be, for example, the arithmetic average roughness of the principal surface of the tape-shaped prepreg 1.

Here, the term "arithmetic average roughness (Ra)" refers to an arithmetic average value of the surface roughness that is calculated with an evaluation length of 2.5 mm and a cut-off value of 0.8 mm in accordance with a measurement method described in JIS-B0651: 2001 "Geometrical Product Specifications (GPS) - Surface texture: Profile method - Nominal characteristics of contact (stylus) instruments".

(Fibers)

The plurality of fibers 2 are unidirectionally oriented and improve the mechanical properties of the fiber-reinforced molded object. The orientation direction of the fibers 2 is preferably identical to the longitudinal direction of the tape-shaped prepreg 1. The fibers 2 may be, for example, those containing glass fibers, carbon fibers, organic fibers, metal fibers, ceramic fibers, natural food fibers, or the like as a major component. The fibers 2 are preferably those containing glass fibers, carbon fibers, organic fibers, metal fibers, or a combination of these as a major component.

The carbon fibers may be, for example, polyacrylonitrile (PAN)-based carbon fibers, petroleum pitch-based carbon fibers, coal pitch-based carbon fibers, rayon-based carbon fibers, lignin-based carbon fibers, or the like.

The organic fibers may be, for example, fibers formed from a heterocyclic ring-containing polymer such as polybenzothiazole or polybenzoxazole, aramid fibers, polyethylene terephthalate fibers, or the like.

The major component of the metal fibers may be, for example, copper, iron, stainless steel, aluminum, nickel, silver, an alloy of these, or the like.

The fibers 2 may be subjected to a surface treatment. The surface treatment may be, for example, a coupling treatment, an oxidation treatment, an ozone treatment, a plasma treatment, a corona treatment, a blasting treatment, or the like.

A lower limit of the degree of dispersion of the fibers 2 is 0.4, preferably 0.5, more preferably 0.6, and still more preferably 0.75. On the other hand, an upper limit of the degree of dispersion of the fibers 2 is 1.5, preferably 1.3, more preferably 1.0, and still more preferably 0.85. When the degree of dispersion of the fibers 2 is smaller than the lower limit, there is a fear that the mechanical properties and uniformity of the product quality of the fiber-reinforced molded object may be insufficient. Conversely, when the degree of dispersion of the fibers 2 exceeds the upper limit, balance between rise in the costs and improvement in the mechanical properties and uniformity of the product quality of the fiber-reinforced molded object may be aggravated.

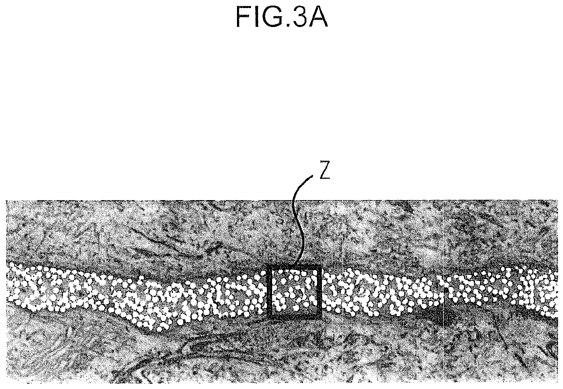

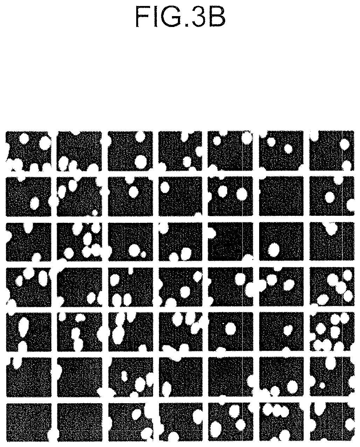

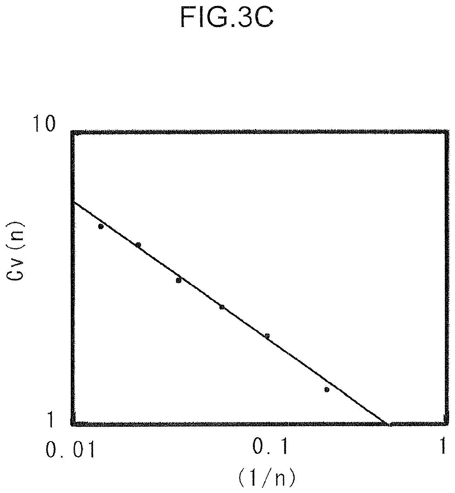

Here, the degree of dispersion of the fibers 2 is a value calculated by the following procedure. The procedure will be described with reference to FIGS. 3A to 3C as schematic views. First, the tape-shaped prepreg 1 is cut in the direction perpendicular to the orientation direction of the plurality of fibers 2, and a cross-sectional image is captured with use of a microscope (for example, optical microscope "BX51" of Olympus Corporation) (FIG. 3A). This cross-sectional image may be subjected to a binarization processing with use of an image processing software (for example, "SigmaScan Pro" of Hulinks Inc.) so that the color of the fibers 2 may be white and the color of the binder 3 may be black in accordance with the needs. Next, a square region of the cross-sectional image (for example, 75 $\mu$m square, region Z in FIG. 3A) is equally divided into n sections (n is an integer of 2 or larger) along each of lengthwise and crosswise directions (FIG. 3B, n = 7), and an areal proportion a of the plurality of fibers 2 is measured in each of the $n^2$ regions. An average value $a_{AVG}$ of the areal proportions a of these regions is divided by the standard deviation $\sigma_a$ to calculate a coefficient of variation Cv(n). Further, by double logarithmic plotting of 1/n on the X-axis and the coefficient of variation Cv(n) on the Y-axis, a gradient of an approximate straight line is determined by the method of least squares (FIG. 3C). A fractal dimension D, which is a value obtained by multiplying the above gradient with -1, is determined as the degree of dispersion of the fibers 2. A lower limit of the number of plots in the above plotting may be, for example, 5. On the other hand, an upper limit of the number of plots in the above plotting may be, for example, 10. Further, a lower limit of n may be, for example, 5. On the other hand, an upper limit of n may be, for example, 100.

A lower limit of the degree of orientation P of the fibers 2 is 0.8, preferably 0.85, and more preferably 0.9. On the other hand, the degree of orientation P of the fibers 2 is less than 1.0. An upper limit of the degree of orientation P of the fibers 2 is preferably 0.99, more preferably 0.96, and still more preferably 0.95. When the degree of orientation P of the fibers 2 is smaller than the lower limit, there is a fear that the mechanical properties and uniformity of the product quality of the fiber-reinforced molded object may be insufficient. Conversely, when the degree of orientation P of the fibers 2 exceeds the upper limit, balance between rise in the costs and improvement in the mechanical properties and uniformity of the product quality of the fiber-reinforced molded object may be aggravated.

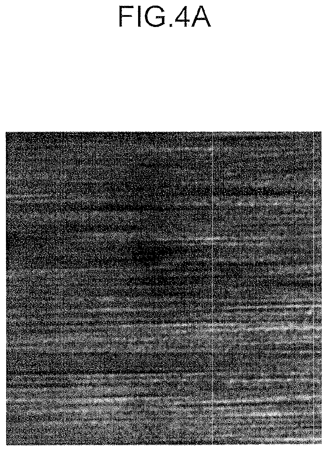

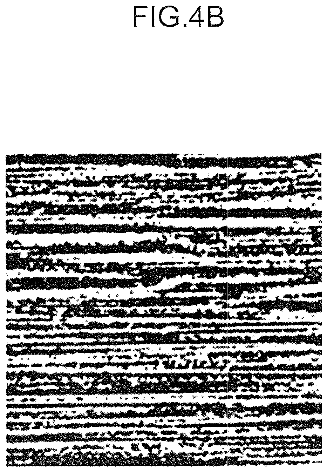

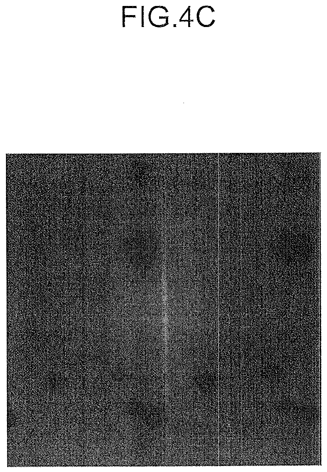

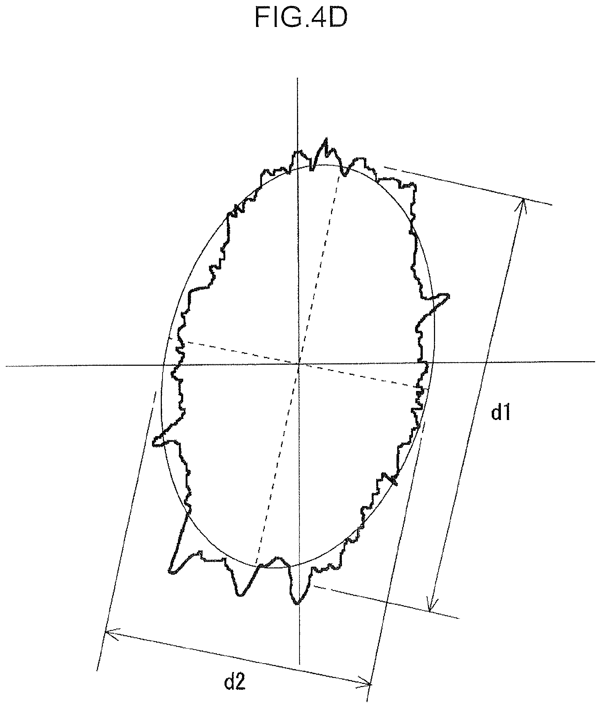

Here, the degree of orientation P of the fibers 2 is a value calculated by the following procedure. The procedure will be described with reference to FIGS. 4A to 4D. First, a cross-sectional image (slice image) of the tape-shaped prepreg 1 in the direction parallel to the orientation direction of the fibers 2 is captured by X-ray CT (computerized tomography) using an X-ray transmission apparatus (for example, "SMX-1000Plus" of Shimadzu Corporation) or the like (FIG. 4A). An image-capturing method is preferably a method of capturing the image from the direction perpendicular to the planar direction of the tape-shaped prepreg 1. Also, this cross-sectional image may be subjected to a binarization processing by image processing so that the color of the part having a low density may be white and the color of the part having a high density may be black in accordance with the needs (FIG. 4B). Next, a square region (for example, 1.0 mm square) on the cross-sectional image is subjected to Fourier transform to obtain a two-dimensional power spectrum image (FIG. 4C). From this power spectrum image, an angle distribution diagram of an average amplitude is obtained, and an approximate ellipse thereof is drawn (FIG. 4D). Then, the major-axis length (d1 in FIG. 4D) and the minor-axis length (d2 in FIG. 4D) of the approximate ellipse are measured, so as to calculate the degree of orientation P by the following equation.

$$\text{Degree of orientation } P = 1 - ((\text{minor-axis length of approximate ellipse})/(\text{major-axis length thereof})) \qquad (\text{Equation 1})$$

Here, the degree of orientation P is preferably an average value of the values determined by measurement using a plurality of (for example, three) cross-sectional images. The plurality of cross-sectional images may be captured respectively at different distances from one surface of the tape-shaped prepreg 1. The distances are preferably constant (for example, the distances from one surface of the tape-shaped prepreg 1 may be 5%, 50%, and 95%, respectively, of the average thickness).

An average fiber length of the plurality of fibers 2 is not particularly limited and can be suitably changed in accordance with the purpose of use. However, an upper limit of the average fiber length of the plurality of fibers 2 is the continuous fiber length of one bobbin of the plurality of fibers 2 that are available. Here, an average length of the tape-shaped prepreg 1 is approximately equal to the average fiber length of the plurality of fibers 2.

An average fineness of the plurality of fibers 2 is not particularly limited and can be suitably changed in accordance with the fineness of commercially available fibers and the average thickness and average width of the tape-shaped prepreg. A specific average fineness of the fibers 2 when the fibers 2 are carbon fibers is, for example, 800 g/1,000 m to 3,200 g/1,000 m. Also, a specific average fineness of the fibers 2 when the fibers 2 are glass fibers is, for example, 1,000 g/1,000 m to 5,000 g/1,000 m, and more specifically 1,200 g/1,000 m, 2,400 g/1,000 m, 4,800 g/1,000 m, or the like. Here, the "average fineness" refers to an average value of the fineness based on corrected weight, determined by measurement according to the B method (simplified method) described in JIS-L1013: 2010 "Testing methods for man-made filament yarns". Here, 1 g/1,000 m corresponds to 1 tex.

A lower limit of the content percentage of the plurality of fibers 2 is 30 vol%, preferably 35 vol%, and more preferably 40 vol%. On the other hand, an upper limit of the content percentage of the plurality of fibers 2 is 60 vol%, preferably 55 vol%, and more preferably 50 vol%. When the content percentage of the plurality of fibers 2 is smaller than the above lower limit, there is a fear that the mechanical properties of the fiber-reinforced molded object may decrease. Conversely, when the content percentage of the plurality of fibers 2 exceeds the above upper limit, there is a fear that it may be difficult to adjust the degree of dispersion and the degree of orientation of the fibers 2 to the aforementioned ranges.

Here, the "content percentage of the plurality of fibers" refers to a volume content percentage that is calculated through dividing the mass content percentage of the plurality of fibers, which is determined by measurement according to JIS-K7075: 1991 "Testing methods for carbon fiber content and void content of carbon fiber reinforced plastics", by the density.

(Binder)

The binder 3 is infiltrated into the plurality of fibers 2 and bonds the fibers 2. The binder 3 may function as a matrix that disperses the fibers 2. The binder 3 typically contains a thermoplastic resin as a major component and may contain other arbitrary components within the range that does not deteriorate the effects of the present invention. The aforesaid other arbitrary components may be, for example, a thermosetting resin, a curing agent thereof, or the like.

Here, the "major component" refers to the component having the largest content and may be, for example, a component having a content of 50 mass% or more.

Examples of the thermoplastic resin include polyethylene such as high-density polyethylene, low-density polyethylene, and straight-chain low-density polyethylene, polyamide such as nylon 6 and nylon 66, polypropylene, acrylonitrile-butadiene-styrene copolymer (ABS), polyacetal, polycarbonate, polyethylene terephthalate, polybutylene terephthalate, polyetherimide, polystyrene, polyethersulfone, polyphenylene sulfide, polyether ketone, and polyether ether ketone. The thermoplastic resin is preferably polypropylene, polyamide, polyethylene terephthalate, polybutylene terephthalate, polyacetal, polycarbonate, or a combination of these.

A lower limit of the content of the thermoplastic resin in the binder 3 is preferably 60 mass%, more preferably 75 mass%, still more preferably 90 mass%, and most preferably 99 mass%. When the content of the thermoplastic resin is smaller than the above lower limit, there is a fear that the formability of the tape-shaped prepreg 1 may decrease.

Examples of the thermosetting resin include unsaturated polyester, vinyl ester resin, epoxy resin, benzoxazine resin, phenolic resin, urea resin, melamine resin, and polyimide. Here, these thermosetting resins are non-cured thermosetting resins that have not been subjected to formation of a three-dimensional cross-linking structure by an ordinary curing treatment. Also, when the binder 3 contains a thermosetting resin, it is preferable that the binder 3 further contains a curing agent that corresponds to this thermosetting resin.

A lower limit of the content percentage of the binder 3 is preferably 40 vol%, more preferably 45 vol%, and still more preferably 50 vol%. On the other hand, an upper limit of the content percentage of the binder 3 is preferably 70 vol%, more preferably 65 vol%, and still more preferably 60 vol%. When the content percentage of the binder 3 is smaller than the above lower limit, there is a fear that it may be difficult to produce the tape-shaped prepreg 1. Conversely, when the content percentage of the binder 3 exceeds the above upper limit, there is a fear that the content of the plurality of fibers 2 may be insufficient.

Examples of the arbitrary components that the tape-shaped prepreg 1 may contain include inorganic fillers such as silica, alumina, magnesium hydroxide, aluminum hydroxide, zinc borate, and antimony oxide, and organic fillers such as fine particles of acrylic rubber, silicon powder, and nylon powder.

[Method for producing tape-shaped prepreg]

As a method for producing the tape-shaped prepreg 1, there is, for example, a method (drawing method) including a step of infiltrating a molten binder 3 into a plurality of fibers 2 (infiltration step), a step of passing the plurality of fibers 2 impregnated with the binder 3 through a nozzle (nozzle passing step), and a step of cooling the plurality of fibers 2 having passed through the nozzle (cooling step). The method for producing the tape-shaped prepreg 1 is preferably further provided with a step of opening a fiber bundle (fiber opening step).

(Fiber opening step)

In the fiber opening step, a fiber bundle is opened. The opened fiber bundle is used as a plurality of fibers 2 in the later-described infiltration step. As a method for opening a fiber bundle, there is, for example, a method of bringing a rotation surface of a fiber-opening roller having a circular cross-section and rotating with a center serving as an axis into contact with a fiber bundle that travels while a tension is being applied by taking up with a motor or the like. By the above method, the fiber bundle is opened into a plurality of fibers 2 by contact with the rotation surface of the fiber-opening roller. Here, a guide bar that has a circular cross-section but does not rotate with a center serving as an axis may be used in place of the fiber-opening roller.

The fiber bundle is a bundle of the plurality of fibers 2 of FIGS. 1 and 2. The number of fibers contained in the fiber bundle can be suitably changed in accordance with the type of the fiber bundle or the like. When the fiber bundle is a bundle of carbon fibers, the number of fibers contained in the fiber bundle may be, for example, 10,000 to 50,000, and specifically, for example, 12,000 (12K), 24,000 (24K), 48,000 (48K), or the like. Here, in the method for producing the tape-shaped prepreg 1, either one fiber bundle alone or two or more fiber bundles may be used.

In the above fiber opening step, the fiber bundle may be preheated in advance. This allows a sizing agent adhering to the fiber bundle to be softened and, as a result, the efficiency of the fiber opening step and the later-described infiltration step can be improved. Here, the sizing agent is an agent that is allowed to adhere to the fiber bundle in order to size the plurality of fibers 2 to facilitate handling. A method for preheating the fiber bundle is not particularly limited and may be, for example, a conventionally known method of using a preheater or the like. A lower limit of the preheating temperature may be, for example, 80°C. On the other hand, an upper limit of the preheating temperature may be, for example, 200°C.

A lower limit of the sum number of the fiber opening rollers and the guide bars with which the fiber bundle is brought into contact is preferably 3, more preferably 4. On the other hand, an upper limit of the sum number of the fiber opening rollers and the guide bars is preferably 8, more preferably 6. When the sum number of the fiber opening rollers and the guide bars is smaller than the above lower limit, there is a fear that the opening of the fiber bundle may be insufficient, and the plurality of fibers 2 may be deviated to the center in the width direction of the tape-shaped prepreg 1, leading to decrease in the degree of dispersion and the degree of orientation. Conversely, when the sum number of the fiber opening rollers and the guide bars exceeds the above upper limit, there is a fear that the fiber bundle may be opened excessively, and the plurality of fibers 2 may be deviated to both ends in the width direction of the tape-shaped prepreg 1 at the time of molding, leading to decrease in the degree of dispersion and the degree of orientation. Also, there is a fear that the fiber bundle may be fractured due to increase in the tension applied to the fiber bundle.

A lower limit of the tension applied to the fiber bundle may be, for example, 250 g. On the other hand, an upper limit of the tension applied to the fiber bundle may be, for example, 350 g. When the tension applied to the fiber bundle is smaller than the above lower limit, there is a fear that the degree of dispersion and the degree of orientation of the fibers 2 of the tape-shaped prepreg 1 may decrease. Conversely, when the tension applied to the fiber bundle exceeds the above upper limit, there is a fear that the fiber bundle may be fractured.

It is preferable that the tension applied to the fiber bundle is kept approximately constant. As a method for allowing the tension applied to the fiber bundle to be approximately constant, there is, for example, a method of adjusting the tension imparted to the fiber bundle with use of a dancer roll. When the tension applied to the fiber bundle is kept approximately constant, the degree of dispersion and the degree of orientation of the tape-shaped prepreg 1 can be enhanced.

A lower limit of the travel speed of the fiber bundle may be, for example, 2.5 m/minute. On the other hand, an upper limit of the travel speed of the fiber bundle may be, for example, 5.0 m/minute. When the travel speed of the fiber bundle is smaller than the above lower limit, there is a fear that the productivity of the tape-shaped prepreg 1 may decrease. Conversely, when the travel speed of the fiber bundle exceeds the above upper limit, there is a fear that the degree of dispersion and the degree of orientation of the fibers 2 of the tape-shaped prepreg 1 may decrease.

(Infiltration step)

The infiltration step allows the molten binder 3 to be infiltrated into the fibers 2. The fibers 2 may be, for example, those obtained by subjecting the fiber bundle to fiber opening. As a method for allowing the molten binder 3 to be infiltrated into the fibers 2, there is, for example, a method of passing the molten binder 3 through the inside of a storage container by allowing the fibers 2 to travel while a tension is being applied through taking up with a motor, or the like. This allows the molten binder 3 to be infiltrated between the fibers 2. The infiltration step may be performed simultaneously with the fiber-opening step. In other words, the fiber-opening roller and the guide bar may be disposed inside the storage container of the molten binder 3, and the molten binder 3 may be infiltrated while opening the fiber bundle.

A lower limit of the temperature in the inside of the storage container of the molten binder 3 may be, for example, 200°C. On the other hand, an upper limit of the temperature in the inside of the storage container of the molten binder 3 may be, for example, 300°C.

A lower limit of the MFR (melt flow rate) of the molten binder 3 is preferably 25 g/10 minutes, more preferably 50 g/10 minutes. On the other hand, an upper limit of the MFR of the molten binder 3 is preferably 150 g/10 minutes, more preferably 120 g/10 minutes. When the MFR of the molten binder 3 is smaller than the above lower limit, there is a fear that the later-described nozzle passing step may be difficult. On the other hand, when the MFR of the molten binder 3 exceeds the above upper limit, there is a fear that the molding of the binder 3 in the later-described nozzle passing step may be difficult. Here, the "MFR of the molten binder 3" refers to the value obtained by measurement in accordance with JIS-K7210-1: 2014 "Plastics - determination of the melt mass-flow rate (MFR) and melt volume-flow rate (MVR) of thermoplastics - Part 1: Standard method".

(Nozzle passing step)

The nozzle passing step allows the fibers 2 impregnated with the binder 3 to pass through a nozzle. As a method for allowing the fibers 2 impregnated with the binder 3 to pass through the nozzle, there is, for example, a method of allowing the fibers 2 to travel and pass through the nozzle while a tension is being applied by taking up with a motor, or the like. The travel speed and the applied tension are generally the same as those of the fiber opening step. The fibers 2 and the binder 3 that is infiltrated into the fibers 2 are molded into a tape shape in the nozzle passing step. A lower limit of the temperature of the nozzle may be, for example, 200°C. On the other hand, an upper limit of the temperature of the nozzle may be, for example, 300°C.

Preferably, an opening of the nozzle is a rectangular slit. An average length of the rectangular slit in the longitudinal direction can be set be approximately the same as the average width of the tape-shaped prepreg 1. Also, an average length of the rectangular slit in the lateral direction can be set be approximately the same as the average thickness of the tape-shaped prepreg 1. The average width and the average thickness of the tape-shaped prepreg 1 can be adjusted by adjustment of the average lengths in the longitudinal and lateral directions of the rectangular slit.

(Cooling step)

The cooling step cools the fibers 2 having passed through the nozzle. An object of the cooling step is to cool the binder 3 quickly to solidify the binder 3 before the fibers 2 subjected to fiber opening are aggregated. By the cooling step, the tape-shaped prepreg 1 is completed. As a method for cooling the fibers 2 having passed through the nozzle, there is, for example, a method of allowing a cooling roller having a surface cooled to be brought into contact with the fibers 2 that have passed through the nozzle to travel while a tension is being applied by taking up with a motor or the like. The travel speed and the applied tension are generally the same as those of the fiber opening step. As a method for cooling the surface of the cooling roller, there is, for example, a method of supplying cooling water or the like.
In the cooling step, it is preferable to use two cooling rollers to prevent warpage of the tape-shaped prepreg 1 or the like, where one cooling roller is brought into contact with the front surface of the fiber bundle that has passed through the nozzle, and the other cooling roller is brought into contact with the back surface of the fiber bundle that has passed through the nozzle. Alternatively, in the cooling step, three or more cooling rollers may be used. Here, in the cooling step, the fiber bundle that has passed through the nozzle may be further cooled at a position downstream of the cooling roller by cooling with water or cooling with air.
A lower limit of the surface temperature of the cooling roller may be, for example, 15°C. On the other hand, an upper limit of the surface temperature of the cooling roller may be, for example, 30°C.
The fibers 2 impregnated with the binder 3 have a comparatively smooth surface immediately after passing through the nozzle; however, the surface is gradually roughened with lapse of time by flow of the molten binder 3 or the like. For this reason, the arithmetic average surface roughness (Ra) of the tape-shaped prepreg 1 can be adjusted to a desired range by adjustment of the time until the fibers 2 that have passed through the nozzle are brought into contact with the cooling roller, the surface temperature of the cooling roller, the number of the cooling rollers, and the area of contact between the fibers 2 that have passed through the nozzle and the cooling roller.
The time until the fibers 2 that have passed through the nozzle are brought into contact with the cooling roller can be adjusted by adjustment of the distance between the tip end of the nozzle and the position at which the fibers impregnated with the binder 3 are brought into contact with the cooling roller (hereafter, this distance may also be referred to as "distance between the tip end of the nozzle and the cooling roller"). A lower limit of the distance is preferably 5 mm, more preferably 8 mm. On the other hand, an upper limit of the distance is preferably 20 mm, more preferably 12 mm. When the distance is less than the above lower limit or when the distance exceeds the above upper limit, there is a fear that it may be difficult to adjust the arithmetic average surface roughness (Ra) of the tape-shaped prepreg 1 to the desired range.

[Advantages]

The tape-shaped prepreg 1 is excellent in formability and in the mechanical properties and uniformity of product quality of the fiber-reinforced molded object, all with a good balance, because the average thickness of the tape-shaped prepreg 1 is suitably small, the content percentage of the fibers 2 is suitably large, and the degree of dispersion and the degree of orientation of the fibers 2 are suitably high.

<Second embodiment>

[Fiber-reinforced molded object]

The fiber-reinforced molded object includes the tape-shaped prepreg 1. Also, the fiber-reinforced molded object may be made of one sheet of the tape-shaped prepreg 1 or may include plural sheets of the tape-shaped prepreg 1. The fiber-reinforced molded object may be, for example, a laminate obtained by lamination of plural sheets of the tape-shaped prepreg 1. In other words, the fiber-reinforced molded object is a composite of the tape-shaped prepreg 1. The shape of the fiber-reinforced molded object is not particularly limited; however, the shape may be, for example, a plate shape, a tubular shape, or the like. A fiber-reinforced molded object having a plate shape can be suitably used, for example, as an exterior part of an automobile, an aircraft, or the like. Also, a fiber-reinforced molded object having a tubular shape can be suitably used, for example, as an article for sports, such as golf shaft or a fishing rod, a reinforcing member of a structure such as a tank or a pipe, or the like.

[Method for producing fiber-reinforced molded object having a plate shape]

As a method for producing the fiber-reinforced molded object having a plate shape, there is, for example, a method (lamination pressing method) including a step of cutting the tape-shaped prepreg 1 into a desired size (cutting step), a step of forming a laminate by lamination of the cut tape-shaped prepregs 1 onto each other (laminate forming step), and a step of heating and pressurizing the laminate (heating and pressurizing step).

(Cutting step)

In the cutting step, the tape-shaped prepreg 1 is cut into a desired size. As a method for cutting the tape-shaped prepreg 1 into a desired size, there is, for example, a method of cutting the tape-shaped prepreg 1 in the direction perpendicular to and/or in the direction parallel to the orientation direction of the plurality of fibers 2 with use of a cutter, scissors, or the like.

(Laminate forming step)

In the laminate forming step, a laminate is formed by lamination of the cut tape-shaped prepregs 1 onto each other. As a method for forming the laminate, there is, for example, a method of successively laminating the cut tape-shaped prepregs 1 onto an upper side of a base material. A lower limit of the number of layers in the laminate may be, for example, 4. On the other hand, an upper limit of the number of layers in the laminate may be, for example, 100. Here, in the laminate, at least a part of the layers may be a different layer other than the tape-shaped prepreg 1. The different layer may be, for example, a layer containing a metal, a resin, or the like as a major component.

In the laminate forming step, it is good to laminate the tape-shaped prepregs 1 so that the orientation directions of the fibers 2 of the tape-shaped prepregs 1 may become quasiisotropic. In other words, assuming that the orientation direction of the fibers 2 of one layer is 0°, it is good to laminate the tape-shaped prepregs 1 so that the orientation directions of the fibers 2 of the layers that are laminated adjacent to the one layer may be tilted at an angular interval of 180°/m (m is the total number of the layers). By lamination of the tape-shaped prepregs 1 so that the orientation directions of the fibers 2 of the tape-shaped prepregs 1 may become quasiisotropic in this manner, quasiisotropy can be imparted to the orientation direction of the fibers 2 in the fiber-reinforced molded object, and strength against loads applied in all directions can be improved.

(Heating and pressurizing step)

In the heating and pressurizing step, the laminate is heated and pressurized. By heating and pressurizing, the binder contained in each prepreg configuring the laminate is melted, and the laminated prepregs are made into a composite. A method for heating and pressurizing the laminate is not particularly limited, and may be, for example, a conventionally known method such as the press-molding method, the autoclave molding method, the bagging molding method, the wrapping tape method, or the internal-pressure molding method. The heating temperature may be, for example, 150°C to 250°C. Also, the pressurizing pressure may be, for example, 3 MPa to 8 MPa. The period of time for the heating and pressurizing may be, for example, 1 minute to 15 minutes.

[Method for producing fiber-reinforced molded object having a tubular shape]

As a method for producing the fiber-reinforced molded object having a tubular shape, there is, for example, a method (filament winding method) including a step of winding the tape-shaped prepreg 1 around a support (winding step) and a step of heating and pressuring the wound tape-shaped prepreg 1 (heating and pressuring step), or the like. Description of the heating and pressuring step of this method will be omitted, since the heating and pressuring step is the same as that of the method for producing the fiber-reinforced molded object having a plate shape.

(Winding step)

In the winding step, the tape-shaped prepreg 1 is wound around a support. As a method for winding the tape-shaped prepreg 1 around a support, there is, for example, helical winding, parallel winding, or the like. The support is not particularly limited and may be a support having a cylindrical shape or a tubular shape, and containing metal, resin, or the like as a major component.

In the method for producing the fiber-reinforced molded object having a tubular shape, the fiber-reinforced molded object may be separated from the support after the heating and pressurizing step. Further, when the support is a structure of a tank or a pipe, the fiber-reinforced molded object may not be separated from the support and may be used as a reinforcing member for improving the strength against the inner pressure of the structure.

<Advantages>

The fiber-reinforced molded object is produced by lamination of the tape-shaped prepreg 1 and hence is excellent in mechanical properties and uniformity of product quality.

[Other embodiments]

The above-described embodiments do not limit the configuration of the present invention. In the embodiments, therefore, omission, substitution, or addition of constituent elements of each part of the embodiments can be made based on the description of the present specification and the technical common sense, and it is to be understood that all these modifications are included within the scope of the present invention.

In the tape-shaped prepreg, a different layer such as an adhesive layer may be laminated on one surface. Further, when the major component of the fibers is a fiber having an electric conductivity, such as a carbon fiber or a metal fiber, the tape-shaped prepreg has an electric conductivity in the orientation direction of the fibers but does not have an electric conductivity in the directions other than that, so that the tape-shaped prepreg can be used for forming an anisotropic electroconductive layer.

As described above, the present specification discloses techniques of various modes. Among these, principal techniques disclosed therein are summarized as follows.

An aspect of the present invention is a tape-shaped prepreg which includes a plurality of unidirectionally oriented fibers and a binder infiltrated into these fibers. The tape-shaped prepreg is characterized by having an average thickness of 50 $\mu$m to 150 $\mu$m and a content percentage of these fibers of 30 vol% to 60 vol%. The tape-shaped prepreg is further characterized in that: when a cross-sectional image perpendicular to the orientation direction of these fibers is equally divided into n sections (n is an integer of 2 or larger) along each of the lengthwise and crosswise directions and a coefficient of variation Cv(n) is determined from the areal proportion a of fibers in each of the regions formed by the division, then the coefficient of variation Cv(n) has a fractal dimension D of 0.4 to 1.5; and the degree of orientation P, expressed by the following equation determined from an approximate ellipse of a power-spectrum image obtained by the Fourier transform of a cross-sectional image parallel to the orientation direction of these fibers, is 0.8 or greater and less than 1.0.

$$\text{Degree of orientation P} = 1 - ((\text{minor-axis length of approximate ellipse})/(\text{major-axis length thereof})) \quad \text{(Equation 1)}$$

The tape-shaped prepreg is excellent in formability and in the mechanical properties and uniformity of product quality of the fiber-reinforced molded object, all with a good balance.

In the tape-shaped prepreg, it is preferable that the plurality of fibers contains a glass fiber, a carbon fiber, an organic fiber, a metal fiber, or a combination of these as a major component.

These fibers are excellent in the balance between softness and strength. For this reason, when the plurality of fibers contains a glass fiber, a carbon fiber, an organic fiber, a metal fiber, or a combination of these as a major component, the formability can be further improved, and also the degree of dispersion and the degree of orientation of the plurality of fibers can be further enhanced, so that the mechanical properties and uniformity of product quality of the fiber-reinforced molded object can be further improved.

In the tape-shaped prepreg, it is preferable that a major component of the binder is a thermoplastic resin.

A thermoplastic resin can be readily melted and molded by being heated. Accordingly, when the binder contains the aforementioned thermoplastic resin as a major component, the formability can be further improved.

The tape-shaped prepreg preferably has an arithmetic average roughness Ra of 2 $\mu$m to 8 $\mu$m.

In this manner, when the arithmetic average roughness (Ra) of the tape-shaped prepreg is set to be within the above-described range, air escapes readily from between the layers during the lamination pressing or filament winding, thereby further improving the formability. Also, generation of air bubbles in the fiber-reinforced molded object can be suppressed, and accordingly, the mechanical properties and uniformity of product quality can be further improved.

Further, another aspect of the present invention is a fiber-reinforced molded object including the tape-shaped prepreg described above.

The fiber-reinforced molded object is produced by lamination of the tape-shaped prepreg and therefore is excellent in mechanical properties and uniformity of product quality.

According to the present invention, the tape-shaped prepreg can form a fiber-reinforced molded object excellent in mechanical properties and uniformity of product quality and also is excellent in formability. Further, the fiber-reinforced molded object is excellent in mechanical properties and uniformity of product quality.

**Examples**

Hereinafter, the present invention will be more specifically described by way of examples; however, the present invention is not limited to these.

First, the plurality of fibers (fiber bundle) used in the examples and the resin used in the binder will be shown below.

Carbon fiber (CF): TORAYCA thread "T-700SC" (12K) manufactured by Toray Industries, Inc.

Glass fiber (GF): Direct Roving "RS240 QR483" (2,400 tex) manufactured by Nitto Boseki Co., Ltd.

Polypropylene (PP): dry blend of "Prime Polypro" (MFR = 30 g / 10 minutes) manufactured by Prime Polymer Co., Ltd. and maleic anhydride modified polypropylene "UMEX1010" manufactured by Sanyo Chemical Industries, Ltd. as a fiber/resin interface adhesive agent at a mass ratio of 95 : 5

< Production of tape-shaped prepreg>

The drawing method was performed under the following conditions, and the tape-shaped prepregs of Examples 1 to 5 and Comparative Examples 1 to 4 shown in Table 1 were produced by adjustment of the type and number of the fiber bundles put to use, the dimension (in the lateral direction) of the rectangular slit of the nozzle, and the distance between the tip end of the nozzle and the cooling roller.

Dimension of rectangular slit of nozzle: 15 mm in the longitudinal direction, 60 $\mu$m to 180 $\mu$m in the lateral direction
Fiber preheating temperature / resin infiltration tank temperature / nozzle temperature: 180°C / 250°C / 250°C
Cooling roller temperature: 20°C
Tape-shaped prepreg take-up speed (travel speed of fiber bundle): 3.5 m/minute
Distance between tip end of nozzle and cooling roller: 10 mm in the examples, 40 mm in the comparative examples

< Method of measuring characteristics of tape-shaped prepreg >

[Arithmetic average roughness (Ra)]

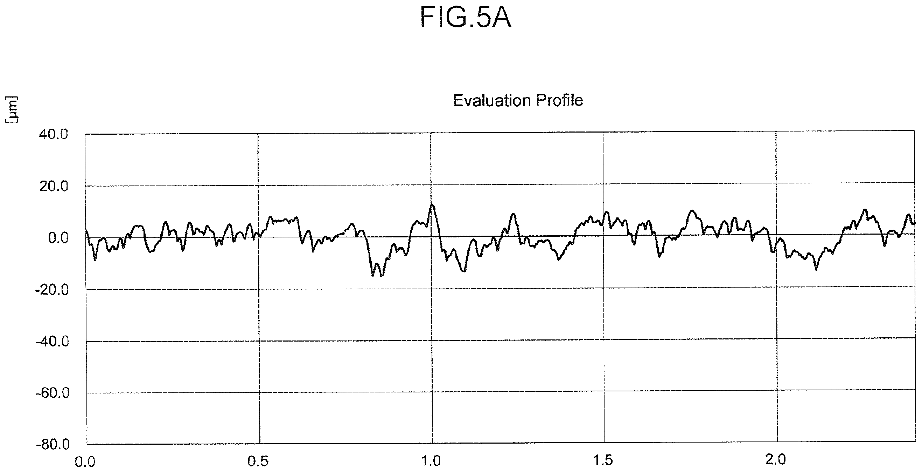

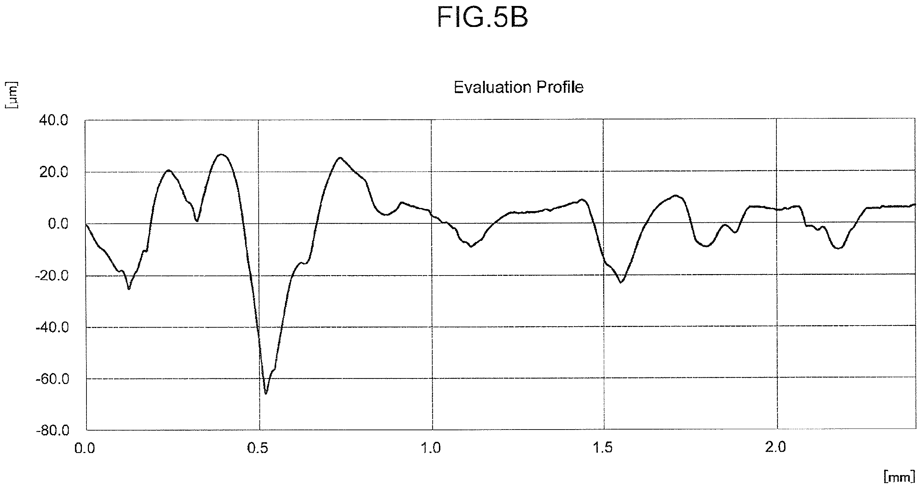

The arithmetic average roughness (Ra) of the tape-shaped prepreg was calculated in accordance with JIS-B0651: 2001 with an evaluation length of 2.5 mm and a cut-off value of 0.8 mm. The arithmetic average roughness (Ra) as used herein refers to the roughness of the principal surface of the tape-shaped prepreg. Here, the measurement data of Example 1 are shown in FIG. 5A, and the measurement data of Comparative Example 1 are shown in FIG. 5B.

[Degree of dispersion (fractal dimension D)]

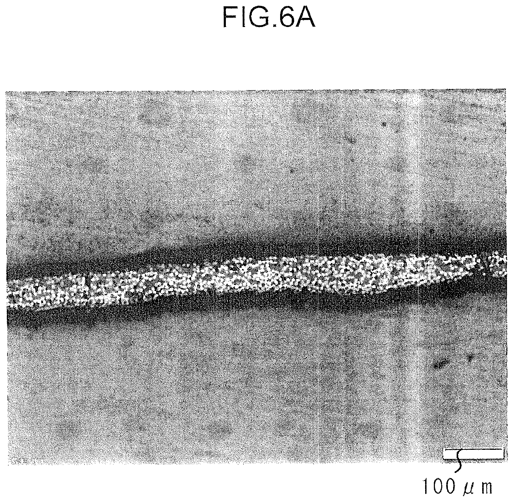

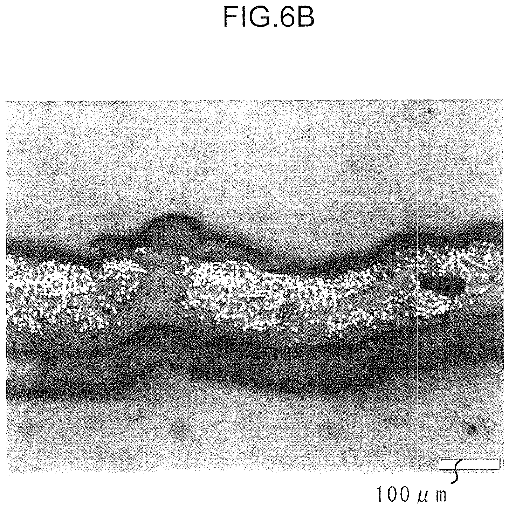

The fractal dimension D of the tape-shaped prepreg was measured by the method described in the embodiments of the present invention. Each of the tape-shaped prepregs of Example 1 and Comparative Example 1 was cut in the direction perpendicular to the orientation direction of the plurality of fibers, and a cross-sectional image was captured with use of a microscope. The captured images are shown respectively in FIG. 6A and 6B. From a square region (75 $\mu$m square) of the cross-sectional image, the fractal dimension D was determined.

[Degree of orientation P]

The degree of orientation P of the tape-shaped prepreg was measured by the following method. That is, first, a cross-sectional image of the tape-shaped prepreg in the direction parallel to the orientation direction of the fibers was captured from the direction perpendicular to the planar direction of the tape-shaped prepreg 1. Next, this cross-sectional image was subjected to a binarization processing by image processing so that the color of the part having a low density might be white and the color of the part having a high density might be black. Thereafter, a square region (75 $\mu$m square) on the cross-sectional image was subjected to Fourier transform to obtain a two-dimensional power spectrum image. From this power spectrum image, an angle distribution diagram of an average amplitude was obtained, and an approximate ellipse thereof was drawn. Then, the major-axis length and the minor-axis length of the approximate ellipse were measured, so as to calculate the degree of orientation P by the following equation.

$$\text{Degree of orientation P} = 1 - ((\text{minor-axis length of approximate ellipse})/(\text{major-axis length thereof})) \quad (\text{Equation 1})$$

[Outer appearance of tape-shaped prepreg]

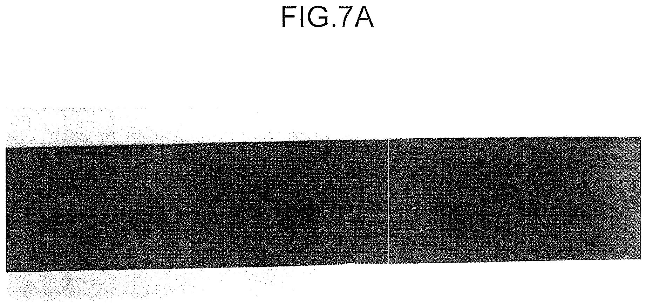

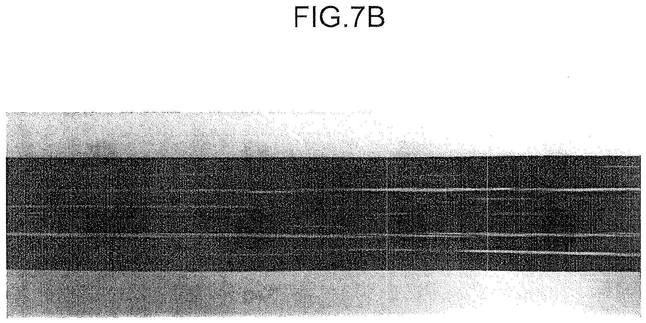

Planar photographs of the tape-shaped prepregs of Example 1 and Comparative Example 1 are shown in FIGS. 7A and 7B. The tape-shaped prepreg of Example 1 had a fractal dimension D of 0.4 to 1.5 and a degree of orientation P of 0.8 or more and less than 1.0, so that the outer appearance was uniform. In contrast, the tape-shaped prepreg of Comparative Example 1 had a fractal dimension D being out of the aforementioned range, so that a line was confirmed on the surface.

<Evaluation>

[Bending test]

Each of the tape-shaped prepregs was cut into a predetermined length, and sheets the number of which is shown in Table 1 were laminated and charged into a mold in which an average width of the cavity was 15 mm. This mold was heated to 220°C on a hot press under no pressure and held for 10 minutes to melt the resin. After the resin was melted, a pressing jig was mounted on the tape-shaped prepreg, and a state of pressurizing at 220°C under 5 MPa for two minutes via this pressing jig was maintained. Thereafter, the mold was cooled to ordinary temperature, whereby a fiber-reinforced resin molded object having an average thickness shown in Table 1 was obtained. With use of this fiber-reinforced resin molded object as a test piece, a three-point bending test was performed according to JIS-K7074: 1988 "Testing Methods for Flexural Properties of Carbon Fiber Reinforced Plastics", so as to measure the flexural strength and the flexural elastic modulus of each test piece. The conditions for the three-point bending test are shown below.
Test piece dimension: length of 100 mm, width of 15 mm
Temperature: ordinary temperature
Indenter radius: 5 mm
Fulcrum radius: 2 mm
Interfulcrum distance: 80 mm
Test speed: 1.0 mm/min
The three-point bending test was performed at five points for each of the test pieces, and an average value and a standard deviation thereof were calculated. The larger the numerical value of the flexural strength [MPa] and the flexural elastic modulus [GPa] are, the more excellent the mechanical properties are. The smaller the standard deviation of the flexural strength [MPa] and the flexural elastic modulus [GPa] is, the more excellent the uniformity of product quality is. For the flexural strength, cases in which the average value was 330 MPa or more and the standard deviation was 20.0 or less were determined as "A (good)", and the cases other than that were determined as "B (not good)". Also, for the flexural elastic modulus [GPa], cases in which the average value was 25 MPa or more and the standard deviation was 4.0 or less were determined as "A (good)", and the cases other than that were determined as "B (not good)". The evaluation results are shown in Table 1.

[Table 1]

| | Configuration of tape-shaped prepreg | | | | | | Configuration of test piece and evaluation result | | | | |
| --- | --- | --- | --- | --- | --- | --- | --- | --- | --- | --- | --- |
| Material composition (Number of fiber bundles put to use) | Tape average thickness [μm] | Fiber content percentage [vol%] | Fractal dimension D | Degree of orientation P | Arithmetic average roughness Ra [μm] | Number of tape lamination [sheets] | Test piece average thickness [mm] | Flexural strength [MPa] (standard deviation) | Flexural strength Evaluation | Flexural elastic modulus [GPa] (standard deviation) | Flexural elastic modulus Evaluation |
| Example 1 — CF/PP (one) | 63 | 52 | 0.81 | 0.97 | 4.1 | 25 | 1.81 | 862 (11.8) | A | 93 (2.9) | A |
| Example 2 — CF/PP (one) | 85 | 38 | 0.92 | 0.98 | 5.6 | 20 | 1.94 | 708 (16.1) | A | 78 (3.6) | A |
| Example 3 — CF/PP (two) | 122 | 51 | 1.22 | 0.97 | 3.9 | 13 | 1.76 | 829 (14.3) | A | 100 (3.4) | A |
| Example 4 — GF/PP | 64 | 41 | 0.89 | 0.94 | 6.1 | 20 | 1.65 | 374 (17.5) | A | 33 (1.8) | A |
| Example 5 — GF/PP | 81 | 34 | 0.65 | 0.91 | 7.1 | 15 | 1.58 | 337 (16.0) | A | 30 (1.7) | A |
| Comparative Example 1 — CF/PP | 86 | 51 | 0.25 | 0.88 | 10.44 | 20 | 2.07 | 777 (41.6) | B | 86 (5.4) | B |
| Comparative Example 2 — CF/PP (two) | 139 | 49 | 0.31 | 0.92 | 9.66 | 13 | 2.20 | 739 (31.3) | B | 97 (5.9) | B |
| Comparative Example 3 — GF/PP | 69 | 43 | 0.36 | 0.85 | 12.77 | 20 | 1.88 | 315 (27.4) | B | 29 (4.3) | B |
| Comparative Example 4 — GF/PP | 87 | 33 | 0.29 | 0.73 | 11.68 | 15 | 1.79 | 320 (25.5) | B | 29 (4.5) | B |

As will be apparent from Table 1, the test pieces prepared with use of the tape-shaped prepregs of Examples 1 to 5 in which the fractal dimension D was 0.4 to 1.5 and the degree of orientation P was 0.8 or more and less than 1.0 had a good flexural strength and a good flexural elastic modulus. In contrast, the test pieces prepared with use of the tape-shaped prepregs of Comparative Examples 1 to 4 in which either the fractal dimension D or the degree of orientation P was out of the aforementioned range had a poor flexural strength or a poor flexural elastic modulus. From this, it can be determined that, when the fractal dimension D and the degree of orientation P are set to be within the above ranges, the tape-shaped prepreg can form a fiber-reinforced molded object excellent in mechanical properties and uniformity of product quality. Further, since the tape-shaped prepreg has an average thickness of 50 $\mu$m to 150 $\mu$m, it can be determined that the tape-shaped prepreg is excellent in formability.

Also, since each of the tape-shaped prepregs of examples has an arithmetic average roughness (Ra) of 2 $\mu$m to 8 $\mu$m, air escapes readily from between the layers during the lamination pressing or filament winding, and accordingly, it can be determined that the tape-shaped prepreg is excellent in formability. Also, generation of air bubbles in the fiber-reinforced molded object can be suppressed, and accordingly, it can be determined that the tape-shaped prepreg is excellent in mechanical properties and uniformity of product quality.

This application is based on Japanese Patent Application No. 2015-105014 filed on May 22nd, 2015.

In order to express the present invention, the present invention has been appropriately and sufficiently described by way of embodiments with reference to the drawings in the above; however, it is to be recognized that those skilled in the art can readily change and/or modify the above embodiments. Therefore, it is to be understood that the changes or modifications are included within the scope of the rights of the claims unless those changes or modifications are at a level departing from the scope of the rights of the claims.

**Industrial Applicability**

According to the present invention, the tape-shaped prepreg can form a fiber-reinforced molded object excellent in mechanical properties and uniformity of product quality and also is excellent in formability. Further, the fiber-reinforced molded object is excellent in mechanical properties and uniformity of product quality.

**Claims**

1.    A tape-shaped prepreg (1) comprising a plurality of unidirectionally oriented fibers (2) and a binder (3) infiltrated into these fibers (2), wherein
the tape-shaped prepreg (1) has an average thickness of 50 $\mu$m to 150 $\mu$m;
a content percentage of the plurality of fibers (2) in the tape-shaped prepreg is 30 vol% to 60 vol%; **characterized in that**
a fractal dimension D of a coefficient of variation Cv(n), which is determined from an areal proportion a of fibers (2) in each of regions obtained by equally dividing a cross-sectional image perpendicular to an orientation direction of the plurality of fibers (2) into n sections (n is an integer of 2 or larger) along each of lengthwise and crosswise directions, is 0.4 to 1.5; and
a degree of orientation P, which is expressed by the following equation:

$$\text{Degree of orientation P} = 1 - ((\text{minor-axis length of approximate ellipse})/(\text{major-axis length thereof})) \quad \text{(Equation 1)}$$

that is determined from an approximate ellipse of a power-spectrum image obtained by Fourier transform of a cross-sectional image parallel to the orientation direction of the plurality of fibers (2), is 0.8 or greater and less than 1.0.

2.    The tape-shaped prepreg (1) according to claim 1, wherein the plurality of fibers (2) contains a glass fiber, a carbon fiber, an organic fiber, a metal fiber, or a combination of these as a major component.

3.    The tape-shaped prepreg (1) according to claim 1, wherein a major component of the binder (3) is a thermoplastic resin.

4.    The tape-shaped prepreg (1) according to claim 1, wherein the tape-shaped prepreg (1) has an arithmetic average roughness Ra of 2 $\mu$m to 8 $\mu$m.

5.    A fiber-reinforced molded object comprising the tape-shaped prepreg (1) according to any one of claims 1 to 4.

**Patentansprüche**

1. Bandförmiges Prepreg (1), mit einer Vielzahl von unidirektional orientierten Fasern (2) und einem Bindemittel (3), das in diese Fasern (2) eingezogen ist, wobei
das bandförmige Prepreg (1) eine durchschnittliche Dicke von 50 $\mu$m bis 150 $\mu$m hat;
ein Inhaltsprozentsatz der Vielzahl von Fasern (2) in dem bandförmigen Prepreg 30 vol% bis 60 vol% beträgt;
**dadurch gekennzeichnet, dass**
eine fraktale Dimension D eines Variationskoeffizienten Cv(n), welcher aus einem Flächenanteil a von Fasern (2) in jedem von Bereichen bestimmt wird, die durch gleichmäßiges Aufteilen eines Schnittbilds, das zu einer Orientierungsrichtung der Vielzahl von Fasern (2) senkrecht ist, entlang von sowohl einer Längs- als auch einer Querrichtung in n Bereiche (n ist eine ganze Zahl von 2 oder mehr) erhalten werden, 0,4 bis 1,5 beträgt; und
ein Orientierungsgrad P, welcher durch die folgende Gleichung ausgedrückt wird:

$$\text{Orientierungsgrad P} = 1 - ((\text{Nebenachsenlänge einer ungefähren Ellipse})/(\text{Hauptachsenlänge davon})) \quad (\text{Gleichung 1}),$$

der aus einer näherungsweise Ellipse von einem Leistungsspektrumsbild bestimmt wird, das durch eine Fourier-Transformation eines Schnittbilds erhalten wird, das zu der Orientierungsrichtung der Vielzahl von Fasern (2) parallel ist, 0,8 oder mehr und weniger als 1,0 beträgt.

2. Bandförmiges Prepreg (1) nach Anspruch 1, wobei die Vielzahl von Fasern (2) als einen Hauptbestandteil eine Glasfaser, eine Carbonfaser, eine organische Faser, eine Metallfaser oder eine Kombination von diesen enthält.

3. Bandförmiges Prepreg (1) nach Anspruch 1, wobei ein Hauptbestandteil des Bindemittels (3) ein thermoplastisches Harz ist.

4. Bandförmiges Prepreg (1) nach Anspruch 1, wobei das bandförmige Prepreg (1) eine arithmetische mittlere Rauheit Ra von 2 $\mu$m bis 8 $\mu$m hat.

5. Faserverstärktes geformtes Objekt, mit dem bandförmigen Prepreg (1) nach einem der Ansprüche 1 bis 4.

**Revendications**

1. Préimprégné en forme de bande (1) comprenant une pluralité de fibres à orientation unidirectionnelle (2) et un liant (3) infiltré dans ces fibres (2), dans lequel
le préimprégné en forme de bande (1) a une épaisseur moyenne de 50 $\mu$m à 150 $\mu$m ;
le pourcentage de teneur en la pluralité de fibres (2) dans le préimprégné en forme de bande est de 30 % en volume à 60 % en volume ;
**caractérisé en ce que**
la dimension fractale D d'un coefficient de variation Cv(n), qui est déterminé à partir d'une proportion surfacique a de fibres (2) dans chacune de régions obtenues par division de façon égale d'une image en coupe transversale perpendiculaire à une direction d'orientation de la pluralité de fibres (2) en n sections (n étant un entier valant 2 ou plus) le long de chacune parmi la direction de la longueur et la direction transversale, est de 0,4 à 1,5 ; et
le degré d'orientation P, qui est exprimé par l'équation suivante :

$$\text{degré d'orientation P} = 1 - ((\text{longueur d'axe mineur d'ellipse approximative}) / (\text{longueur de son axe majeur})) \quad (\text{Equation 1})$$

qui est déterminé à partir d'une ellipse approximative d'une image de spectre de puissance obtenue par transformée de Fourier d'une image en coupe transversale parallèle à la direction d'orientation de la pluralité de fibres (2), est de 0,8 ou moins et est inférieur à 1,0.

**2.** Préimprégné en forme de bande (1) selon la revendication 1, dans lequel la pluralité de fibres (2) contient, en tant que composant majeur, des fibres de verre, des fibres de carbone, des fibres organiques, des fibres métalliques, ou une combinaison de celles-ci.

**3.** Préimprégné en forme de bande (1) selon la revendication 1, dans lequel un composant majeur du liant (3) est une résine thermoplastique.

**4.** Préimprégné en forme de bande (1) selon la revendication 1, lequel préimprégné en forme de bande (1) a une rugosité moyenne arithmétique Ra de 2 $\mu$m à 8 $\mu$m.

**5.** Objet renforcé par des fibres comprenant le préimprégné en forme de bande (1) de l'une quelconque des revendications 1 à 4.

FIG.1

# FIG.2

# FIG.3A

# FIG.3B

# FIG.3C

# FIG.4A

FIG.4B

FIG.4C

# FIG.4D

# FIG.5A

Evaluation Profile

[μm]

EP 3 299 408 B1

## FIG.5B

Evaluation Profile

## FIG.6A

$100\,\mu\,m$

# FIG.6B

100 μ m

FIG.7A

FIG.7B

## REFERENCES CITED IN THE DESCRIPTION

**Patent documents cited in the description**

- JP 2000355629 A
- JP 6143273 A
- JP 2014091825 A
- WO 2008099670 A1
- JP 2015105014 A

**Non-patent literature cited in the description**

- Plastics - Film and sheeting - Determination of thickness". The term ''orientation direction of fibers. *JIS-K7130,* 1999
- Geometrical Product Specifications (GPS) - Surface texture: Profile method - Nominal characteristics of contact (stylus) instruments. *JIS-B0651,* 2001
- Testing methods for man-made filament yarns. *JIS-L1013,* 2010
- Testing methods for carbon fiber content and void content of carbon fiber reinforced plastics. *JIS-K7075,* 1991
- Plastics - determination of the melt mass-flow rate (MFR) and melt volume-flow rate (MVR) of thermoplastics - Part 1: Standard method. *JIS-K7210-1,* 2014
- Testing Methods for Flexural Properties of Carbon Fiber Reinforced Plastics. *JIS-K7074,* 1988